# EUROPÄISCHE PATENTSCHRIFT

(11) **EP 3 666 496 B1**
(45) Veröffentlichungstag und Bekanntmachung des Hinweises auf die Patenterteilung: **13.04.2022**
(21) Anmeldenummer: 18211294.6
(22) Anmeldetag: 10.12.2018
(51) Int. Cl.: B29C 49/20

(54) **VERFAHREN ZUR HERSTELLUNG EINES KUNSTSTOFFTANKS**
METHOD FOR PRODUCING A PLASTIC TANK
PROCÉDÉ DE FABRICATION D'UN RÉSERVOIR EN MATIÈRE PLASTIQUE

(43) Veröffentlichungstag der Anmeldung: 17.06.2020
(73) Patentinhaber: Magna Energy Storage Systems GesmbH, 8261 Sinabelkirchen (AT)
(72) Erfinder: FUCHS, Philipp, 8041 Graz (AT); PUCHLEITNER, Rainer, 8052 Graz (AT); URDL, Christian, 8113 St. Oswald bei Plankenwarth (AT); WIMMER, Florian, 8334 Riegersburg (AT)
(74) Vertreter: Zangger, Bernd

(56) Entgegenhaltungen:
- CN-A- 105 135 207
- US-A1- 2014 170 353

## Beschreibung

### Gebiet der Erfindung

Die vorliegende Erfindung betrifft ein Verfahren zur Herstellung eines Kunststofftanks, insbesondere für ein Kraftfahrzeug.

### Stand der Technik

Es ist bekannt, dass Kunststofftanks, die in jüngerer Zeit beispielsweise als Kraftstofftanks von Kraftfahrzeugen wie Personenkraftwagen und Lastkraftwagen verbaut werden, zusätzlich zu einer Reihe positiver Eigenschaften problematisch sind in Bezug auf mögliche Verformungen des Kraftstofftanks. Bei üblichem Betrieb von Tanksystemen in Kraftfahrzeugen kann es in bestimmten Zonen des Tanksystems zu hohen Verformungen kommen. Vor allem Satteltanksysteme, die Eindellungen aufweisen können und deren Geometrie eine starke Abhängigkeit von Fahrzeugteilen wie Kardanwelle und Abgasanlage haben, müssen im Tunnelbereich hohe Steifigkeit aufweisen. Verkettungen von Druck und Temperaturspitzen in Zonen des Tankes können, vor allem bei Kunststofftanks, hohe Relativbewegungen der Tankschalen bedingen und müssen durch konstruktive Maßnahmen beschränkt werden.

Stützkonzepte zur Verringerung der unerwünschten Verformungen der Kraftstofftanks, die aus dem Stand der Technik bekannt sind, verwenden zumeist karosseriefeste Anlagepunkte um Verformungen der Tankwände zu begrenzen. Insbesondere für unter Druck befindliche Tanksysteme reichen diese Maßnahmen jedoch nicht aus und es müssen zusätzliche Maßnahmen verwendet werden, um Verformungen zu vermindern. Oftmals wird die Schalendicke der Tankblase erhöht oder es werden versteifende angeschweißte Bauteile verwendet, um die Verformung zu begrenzen. Solche Maßnahmen ziehen signifikante Einbußen für das Tankvolumen nach sich und beschränken somit die Funktion des Systems.

Aus der US 2014/170353 A1 ist ein Verfahren zum Formen eines Verbundbauteils bekannt, wobei das Verfahren umfasst: Einsetzen eines endlosfaserverstärkten thermoplastischen Bandes in eine Formvorrichtung; Einführen eines Vorformlings in die Formvorrichtung, wobei der Vorformling ein thermoplastisches Material umfasst; und Blasformen des Vorformlings innerhalb der Formvorrichtung, so dass sich der Vorformling mit dem Band verbindet und die Verbundkomponente bildet. Das Verbundbauteil kann ferner eine Einlage enthalten, von der mindestens ein Teil zwischen der Innenschicht und der Außenschicht des Verbundbauteils angeordnet ist.

### Zusammenfassung der Erfindung

Es ist eine Aufgabe der Erfindung, ein Verfahren zur Herstellung eines Kunststofftanks anzugeben, wobei der hergestellte Kunststofftank in dieser Hinsicht verbessert ist und insbesondere unerwünschte Verformungen verringert werden, ohne das Volumen des Kraftstofftanks signifikant zu reduzieren.

Die Lösung der Aufgabe erfolgt durch eine Verfahren zur Herstellung eines Kunststofftanks, wobei der Kunststofftank eine Tankwand aus Kunststoff und mindestens ein Versteifungsprofil umfasst zur Minimierung einer unerwünschten Verformung des Kunststofftanks, wobei das Versteifungsprofil in ein Schalenwerkzeug eingelegt wird, dass das Versteifungsprofil mittels Unterdruck im Schalenwerkzeug in Position gehalten wird, dass das Material der Tankwand mittels Unterdruck an die Wände des Schalenwerkzeugs gesaugt wird um die Tankwand auszuformen, so dass beim Ausformen der Tankwand das Material der Tankwand um das Versteifungsprofil gesaugt wird und dabei ein formschlüssiger Halt zwischen Tankwand und Versteifungsprofil entsteht, wobei das Versteifungsprofil mehrere Öffnungen aufweist, so dass beim Ausformen der Tankwand das Material der Tankwand durch die Öffnungen gesaugt wird und dabei ein formschlüssiger Halt zwischen Tankwand und Versteifungsprofil entsteht.

Erfindungsgemäß wird ein Kunststofftank in einem Schalenwerkzeug mittels eines Vakuums, das das Plattenmaterial gegen die Werkzeugwand saugt, ausgeformt, insbesondere durch Tiefziehen mittels Vakuum. Das Vakuum zum Formen der Tankwand des Kunststofftanks wird gleichzeitig genutzt, um mindestens ein Versteifungsprofil im Schalenwerkzeug während des Herstellungsprozesses der Tankwand in Position zu halten. Das Kunststoff-Material der Tankwand wird durch das selbe Vakuum gegen die Schalen des Schalenwerkzeugs und somit auch gegen das Versteifungsprofil gesogen, so dass das Material der Tankwand hinter Bereiche des Versteifungsprofils, insbesondere hinter Hinterschneidungen und dergleichen, gelangen kann, so dass ein formschlüssiger Halt des Versteifungsprofils an der Tankwand des Kunststofftanks entsteht. Dabei entsteht kein stoffschlüssiger Halt des Versteifungsprofils an der Tankwand.

Erfindungsgemäß weist das Versteifungsprofil mehrere Öffnungen auf, so dass beim Ausformen der Tankwand das Material der Tankwand durch die Öffnungen gesaugt wird und dabei ein formschlüssiger Halt zwischen Tankwand und Versteifungsprofil entsteht. Hierdurch kann die Festigkeit der Anbindung an den Kunststoffbehälter weiter erhöht werden.

Durch ein solches Versteifungsprofil kann bei einem minimalen Volumenverlust eine hohe versteifende Wirkung erzielt werden. Die Herstellung des Kunststofftanks und dessen Versteifung ist dabei sehr einfach, kostengünstig und rasch.

Der hergestellte Kunststofftank kann ein Kunststofftank für einen Lastkraftwagen sein, insbesondere ein Satteltank.

Bevorzugt werden auf die beschriebene Weise mindestens zwei oder mehrere Versteifungsprofile an der Tankwand des Kunststofftanks befestigt.

Das Versteifungsprofil oder die Versteifungsprofile können Streben oder Rippen an der Tankwand bilden.

Bevorzugt ist das Versteifungsprofil im Wesentlichen T-förmig, um ein hohes geometrisches Widerstandsmoment zu generieren.

Bevorzugt wird das Versteifungsprofil so im Schalenwerkzeug in Position gehalten, dass ein breiteres Ende des Versteifungsprofils, insbesondere der waagrechte Strich einer T-Form, vom Schalenwerkzeug weiter absteht, als ein schmäleres Ende des Versteifungsprofils, insbesondere der senkrechte Strich einer T-Form.

Vorzugsweise besteht das Versteifungsprofil aus faserverstärktem Kunststoff. Das Versteifungsprofil kann auch aus Metall bestehen.

Bevorzugt wird das Versteifungsprofil in eine passende Ausnehmung im Schalenwerkzeug eingelegt und in der Ausnehmung mittels Unterdruck in Position gehalten.

Das Versteifungsprofil kann, vor dem Einlegen in das Schalenwerkzeug, durch einen kontinuierlichen Prozess wie Extrudieren hergestellt werden oder durch einen diskontinuierlichen Prozess wie Spritzgießen hergestellt werden.

Vorzugsweise wird das Versteifungsprofil vor dem Einlegen in das Schalenwerkzeug in eine der späteren Tankwand angepasste Form gebogen.

Bevorzugt folgt nach dem Ausformen der Tankwand ein Abkühlprozess, wobei beim Abkühlprozess das Material der Tankwand so schrumpft, dass der formschlüssige Halt zwischen Tankwand und Versteifungsprofil verbessert wird und eine Vorspannung im Verstärkungselement erzeugt.

Vorzugsweise weist das Versteifungsprofil mindestens an einem Ende oder auch an beiden Enden eine Ausnehmung zum Längenausgleich auf, so dass bei einem Abkühlprozess ein Schrumpfen des Materials der Tankwand durch die Ausnehmung aufgenommen werden kann.

Vorzugsweise sind die Endbereiche des Versteifungsprofils auslaufend gestaltet um einen homogenen Spannungsverlauf zu gewährleisten.

### Kurzbeschreibung der Zeichnungen

Die Erfindung wird im Folgenden beispielhaft unter Bezugnahme auf die Zeichnungen beschrieben.
- Fig. 1: ist eine schematische Ansicht von außen auf einen Ausschnitt eines durch ein erfindungsgemäßes Verfahren hergestellten Kunststofftanks.

- Fig. 2: ist eine Ansicht eines Versteifungsprofils von der der Tankwand zugewandten Seite her.
- Fig. 3: ist eine Ansicht eines Versteifungsprofils gemäß Fig. 2 von der der Tankwand abgewandten Seite her.
- Fig. 4: ist eine Ansicht auf einen Kunststofftank gemäß Fig. 1 von der Seite und zeigt die Position des Schnittes A-A.
- Fig. 5: ist eine Schnittansicht des Schnittes A-A gemäß Fig. 4.

### Detaillierte Beschreibung der Erfindung

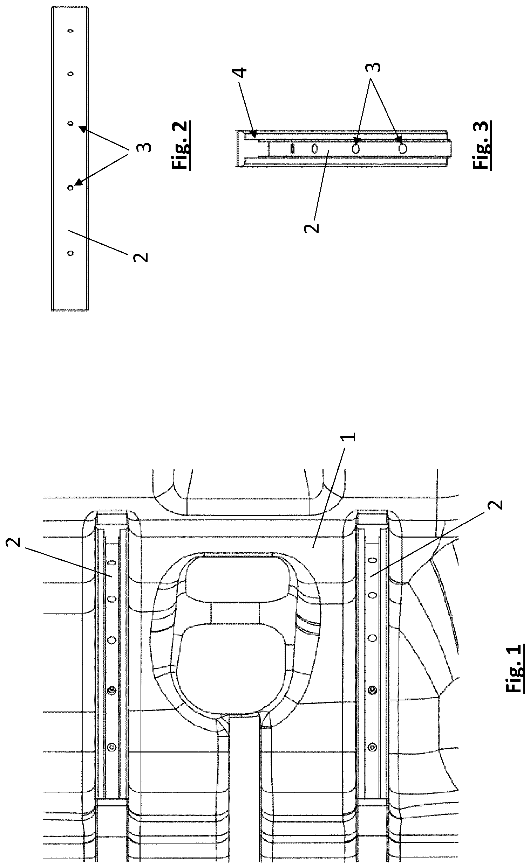

In Fig. 1 ist ein Kunststofftank ausschnittsweise dargestellt, der auf erfindungsgemäße Weise hergestellt worden ist.

Der Kunststofftank umfasst eine Tankwand 1 aus Kunststoff, beispielsweise aus HDPE, und mindestens ein, im dargestellten Ausschnitt aber bereits zwei Versteifungsprofile 2, zur Minimierung einer unerwünschten Verformung des Kunststofftanks.

Das Versteifungsprofil 2 wurde bei der Formung des Kunststofftanks in ein Schalenwerkzeug eingelegt, dann das Versteifungsprofil 2 mittels Unterdruck im Schalenwerkzeug in Position gehalten, sodann das Material der Tankwand 1 mittels Unterdruck an die Wände des Schalenwerkzeugs gesaugt um die Tankwand 1 auszuformen. Beim Ausformen der Tankwand 1 wurde dadurch das Material der Tankwand 1 um das Versteifungsprofil 2 gesaugt und dabei ein formschlüssiger Halt zwischen Tankwand 1 und Versteifungsprofil 2 hergestellt. Das Versteifungsprofil 2 weist einen T-förmigen Querschnitt auf und weist dadurch Hinterschneidungen auf, die vom Material der Tankwand 1 hintergriffen werden können. Ein stoffschlüssiger Halt zwischen Versteifungsprofil 2 und Tankwand 1 besteht nicht.

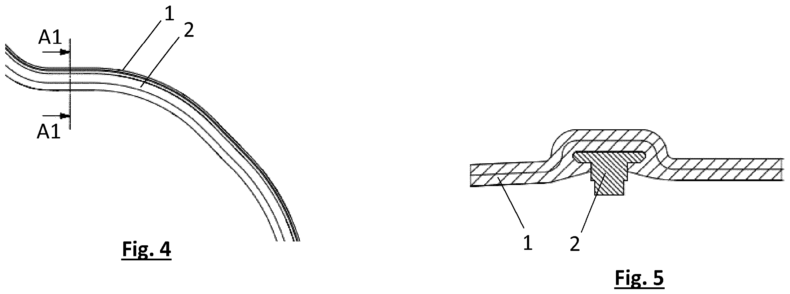

Die Montage erfolgt also durch das formschlüssige Umschließen des Tankschalenmaterials im Fügeprozess. Die Versteifungsprofile 2 werden in das offene Schalenwerkzeug in eine dafür vorgesehene Kavität eingelegt und durch anlegen von Vakuum in Position gehalten. Die Tankwand 1 wird in einem weiteren Schritt durch Anlegen von Unterdruck um das Profil der Versteifungsprofile 2 gesaugt. Es wird so bereits während des Formvorganges die Verbindung zwischen Rippenelementen, also Versteifungsprofilen 2, und Tankblase, also Tankwand 1, erreicht. Die Montage erfolgt formschlüssig, wie beispielsweise in Fig. 1, Fig. 3 und Fig. 5 an der Form des Versteifungsprofils 2 gut ersichtlich. Möglich ist auch die Durchdringung des eingelegten Versteifungsprofils 2 durch das schmelzflüssige Schalenmaterial, also Material der Tankwand 1. Hierzu können im Versteifungsprofil 2 Öffnungen 3 ausgebildet sein, wie in den Fig. 1 bis 3 dargestellt. Dies erzeugt durch zusätzliche Hinterschneidungen zusätzliche Festigkeit.

Eine zusätzliche Verpressung der Tankwand 1 zur Rippe bzw. dem Versteifungsprofil 2 kann durch den Schrumpf des Schalenmaterials von grob 3% im Abkühlprozess erreicht werden. Ein Schrumpf in Längsrichtung der Rippe 2 kann durch eine geeignete Aussparung oder Ausnehmung 4 zum Längenausgleich im Auslaufbereich der Rippen 2 vorgehalten werden.

Die Versteifungsprofile bestehen aus einem Werkstoff mit hoher Festigkeit und hoher Biegesteifigkeit. Hierfür kommen insbesondere faserverstärkte Kunststoffe sowie Metallbauteile in Frage.

Die Herstellung der Versteifungsprofile 2 kann wahlweise durch einen diskontinuierlichen Prozess wie Spritzguss oder einen kontinuierlichen Prozess wie Extrusion eines Profils ausgeführt werden.

Ein Versteifungsprofil 2 kann durch einen Umformprozess in Form gebogen werden.

Die geometrische Ausführung eines Versteifungsprofils 2 kann so ausgeführt werden, dass ein form- und kraftschlüssiger jedoch nicht stoffschlüssiger Verbund zwischen Tankwand 1 und Versteifungselement 2 eingegangen werden kann. Die Geometrie des Versteifungselements 2 ist der Tankgeometrie angepasst. Bevorzugte Geometrien sind Streben an der Tankschale.

Ein Versteifungsprofil 2 kamm mehrere Öffnungen 3 aufweisen, so dass beim Ausformen der Tankwand 1 das Material der Tankwand 1 durch die Öffnungen 3 gesaugt wird und dabei ein verbesserter formschlüssiger Halt zwischen Tankwand 1 und Versteifungsprofil 2 entsteht.

### Bezugszeichenliste

- 1: Tankwand
- 2: Versteifungsprofil
- 3: Öffnung
- 4: Ausnehmung

## Patentansprüche

1. Verfahren zur Herstellung eines Kunststofftanks, wobei der Kunststofftank eine Tankwand (1) aus Kunststoff und mindestens ein Versteifungsprofil (2) umfasst zur Minimierung einer unerwünschten Verformung des Kunststofftanks,
wobei das Versteifungsprofil (2) in ein Schalenwerkzeug eingelegt wird, dass das Versteifungsprofil (2) mittels Unterdruck im Schalenwerkzeug in Position gehalten wird, **dadurch gekennzeichnet, dass** das Material der Tankwand (1) mittels Unterdruck an die Wände des Schalenwerkzeugs gesaugt wird um die Tankwand (1) auszuformen, so dass beim Ausformen der Tankwand (1) das Material der Tankwand (1) um das Versteifungsprofil (2) gesaugt wird und dabei ein formschlüssiger Halt zwischen Tankwand (1) und Versteifungsprofil (2) entsteht, wobei das Versteifungsprofil (2) mehrere Öffnungen (3) aufweist, so dass beim Ausformen der Tankwand (1) das Material der Tankwand (1) durch die Öffnungen (3) gesaugt wird und dabei ein formschlüssiger Halt zwischen Tankwand (1) und Versteifungsprofil (2) entsteht.

2. Verfahren nach Anspruch 1,
**dadurch gekennzeichnet, dass** das Versteifungsprofil (2) aus faserverstärktem Kunststoff besteht.

3. Verfahren nach zumindest einem der vorhergehenden Ansprüche, **dadurch gekennzeichnet, dass** das Versteifungsprofil (2) in eine passende Ausnehmung im Schalenwerkzeug eingelegt wird und in der Ausnehmung mittels Unterdruck in Position gehalten wird.

4. Verfahren nach zumindest einem der vorhergehenden Ansprüche, **dadurch gekennzeichnet, dass** das Versteifungsprofil (2) vor dem Einlegen in das Schalenwerkzeug durch einen kontinuierlichen Prozess wie Extrudieren hergestellt wird oder durch einen diskontinuierlichen Prozess wie Spritzgießen hergestellt wird.

5. Verfahren nach zumindest einem der vorhergehenden Ansprüche, **dadurch gekennzeichnet, dass** das Versteifungsprofil (2) vor dem Einlegen in das Schalenwerkzeug in eine der späteren Tankwand (1) angepasste Form gebogen wird.

6. Verfahren nach zumindest einem der vorhergehenden Ansprüche, **dadurch gekennzeichnet, dass** nach dem Ausformen der Tankwand (1) ein Abkühlprozess folgt, wobei beim Abkühlprozess das Material der Tankwand (1) so schrumpft, dass der formschlüssige Halt zwischen Tankwand (1) und Versteifungsprofil (2) verbessert wird.

7. Verfahren nach zumindest einem der vorhergehenden Ansprüche, **dadurch gekennzeichnet, dass** das Versteifungsprofil (2) mindestens an einem Ende eine Ausnehmung (4) zum Längenausgleich aufweist.

## Claims

1. Process for manufacturing a plastic tank, the plastic tank comprising a plastic tank wall (1) and at least one stiffening profile (2) to minimise undesirable deformation of the plastic tank, wherein the stiffening profile (2) is inserted into a shell mould, wherein the stiffening profile (2) is held in position in the shell mould by means of negative pressure, **characterized in that** the material of the tank wall (1) is sucked onto the walls of the shell mould by means of negative pressure in order to form the tank wall (1), so that, when the tank wall (1) is formed, the material of the tank wall (1) is sucked around the stiffening profile (2) and a form-fitting hold is created between the tank wall (1) and the stiffening profile (2)wherein the stiffening profile (2) has several openings (3), so that, when the tank wall (1) is formed, the material of the tank wall (1) is sucked through the openings (3) and a form-fitting hold is created between the tank wall (1) and the stiffening profile (2).

2. Process according to Claim 1,
**characterized in that** the stiffening profile (2) consists of fibre-reinforced plastic.

3. Process according to at least one of the preceding claims, **characterized in that** the stiffening profile (2) is inserted into a suitable recess in the shell mould and is held in position in the recess by means of negative pressure.

4. Process according to at least one of the preceding claims, **characterized in that** the stiffening profile (2) is produced by a continuous process such as extrusion or by a discontinuous process such as injection moulding before insertion into the shell mould.

5. Process according to at least one of the preceding claims, **characterized in that** the stiffening profile (2) is bent into a shape adapted to the later tank wall (1) before being inserted into the shell mould.

6. Process according to at least one of the preceding claims, **characterized in that** a cooling process follows after the tank wall (1) has been formed, the material of the tank wall (1) shrinking during the cooling process in such a way that the form-fitting hold between the tank wall (1) and the stiffening profile (2) is improved.

7. Process according to at least one of the preceding claims, **characterized in that** the stiffening profile (2) has at least at one end a recess (4) for length compensation.

## Revendications

1. Procédé de fabrication d'un réservoir en matière plastique, le réservoir en matière plastique comprenant une paroi de réservoir (1) en matière plastique et au moins un profilé de renforcement (2) pour minimiser une déformation indésirable du réservoir en matière plastique, le profilé de renforcement (2) étant inséré dans un outil à coque, le profilé de renforcement (2) étant maintenu en position dans l'outil à coque au moyen d'une dépression, **caractérisé en ce que** le matériau de la paroi de réservoir (1) est aspiré au moyen d'une dépression contre les parois de l'outil à coque pour former la paroi de réservoir (1), de telle sorte que, lors de la formation de la paroi de réservoir (1), le matériau de la paroi de réservoir (1) est aspiré autour du profilé de renforcement (2) et il en résulte un maintien par complémentarité de forme entre la paroi de réservoir (1) et le profilé de renforcement (2), le profilé de renforcement (2) présentant plusieurs ouvertures (3), de telle sorte que, lors de la formation de la paroi de réservoir (1), le matériau de la paroi de réservoir (1) est aspiré à travers les ouvertures (3) et il en résulte un maintien par complémentarité de forme entre la paroi de réservoir (1) et le profilé de renforcement (2).

2. Procédé selon la revendication 1, **caractérisé en ce que** le profilé de renforcement (2) est constitué de matière plastique renforcée par des fibres.

3. Procédé selon au moins l'une quelconque des revendications précédentes, **caractérisé en ce que** le profilé de renforcement (2) est inséré dans un évidement approprié dans l'outil à coque et est maintenu en position dans l'évidement au moyen d'une dépression.

4. Procédé selon au moins l'une quelconque des revendications précédentes, **caractérisé en ce que** le profilé de renforcement (2) est fabriqué par un processus continu, tel que l'extrusion, ou par un processus discontinu, tel que le moulage par injection, avant l'insertion dans l'outil à coque.

5. Procédé selon au moins l'une quelconque des revendications précédentes, **caractérisé en ce que** le profilé de renforcement (2) est plié en une forme adaptée à la paroi de réservoir ultérieure (1) avant l'insertion dans l'outil à coque.

6. Procédé selon au moins l'une quelconque des revendications précédentes, **caractérisé en ce qu'**un processus de refroidissement a lieu après la formation de la paroi de réservoir (1), le matériau de la paroi de réservoir (1) se rétractant lors du processus de refroidissement de telle sorte que le maintien par complémentarité de forme entre la paroi de réservoir (1) et le profilé de renforcement (2) est amélioré.

7. Procédé selon au moins l'une quelconque des revendications précédentes, **caractérisé en ce que** le profilé de renforcement (2) présente au moins à une extrémité un évidement (4) pour la compensation de longueur.
